# EUROPEAN PATENT APPLICATION

(11) **EP 3 940 947 A1**
(43) Date of publication of application: **19.01.2022**
(21) Application number: 20875935.7
(22) Date of filing: 13.04.2020
(51) Int. Cl.: H02P 27/06

(54) **FREQUENCY CONVERTER CONTROLLING METHOD AND FREQUENCY CONVERTER**

(30) Priority: 18.10.2019 CN 201910992426
(71) Applicant: Chongqing Midea General Refrigeration Equipment Co., Ltd., Chongqing 401336 (CN); Midea Group Co., Ltd., Foshan, Guangdong 528311 (CN)
(72) Inventor: LUO, Yujun, Chongqing 401336 (CN)
(74) Representative: RGTH
(86) International application number: PCT/CN2020/084536
(87) International publication number: WO 2021/073061

(57) **Abstract**

A control method for a frequency converter and a frequency converter are provided. The control method includes measuring an electrical parameter of a bus of a frequency converter (S 101); and if the electrical parameter of the bus is abnormal, switching the frequency converter to a power generation mode to adjust, according to a target voltage value of the bus, a voltage and phase of a three-phase power outputted by the frequency converter to a motor (S 102). The electrical parameter of the bus is measured, such that the frequency converter can be switched to a power generation mode if the electrical parameter is abnormal, thus adjusting the voltage and phase of the outputted three-phase electricity and maintaining reasonable voltage and phase differences between the voltage and phase and a counter-electromotive force of the motor. In this way, current harmonics and power factors of the motor are optimized, currents of the motor are ensured to be sinusoidal, and heat generation of the motor is controlled to be within a reasonable range, thereby improving the reliability of the motor unit.

## Description

### CROSS-REFERENCE TO RELATED APPLICATIONS

This present application claims priority from and the benefit of Chinese Patent Application No. 201910992426.2 filed with the China National Intellectual Property Administration on October 18, 2019, the entire content of which is incorporated herein by reference.

### FIELD

This application relates to the technical field of frequency conversion control, in particular to a control method for a frequency converter and a frequency converter.

### BACKGROUND

In related technologies, the power supply of magnetic bearings is mainly supplied by the bus of a frequency converter and the Uninterruptible Power Supply (UPS). The power supply system through the UPS is complex, cost-high, and needs a high maintenance cost. The power supply via the frequency converter bus usually adopts a BOOST mode when the abnormal voltage is detected and the bus is charged by a counter-electromotive force of a motor, resulting in disadvantages of easily generating unstable bus voltage, non-sinusoidal current for the motor, high heat generation for the motor, or the like.

### SUMMARY

This application at least solves one of the above technical problems.

According to a first aspect of embodiments of the present disclosure, there is provided a control method for a frequency converter. The control method for a frequency converter enables the frequency converter to be switched to a power generation mode if an electrical parameter of a bus is abnormal, thus optimizing current harmonics and power factors of the motor. Therefore, the current of the motor is ensured to be sinusoidal, and the heat generation of the motor is controlled to be within a reasonable range, thereby improving the reliability of the motor unit.

According to a second aspect of embodiments of the present disclosure, there is provided a frequency converter.

According to a third aspect of embodiments of the present disclosure, there is provided a computer-readable storage medium.

For the above aspects, the first aspect of embodiments of the present disclosure provides a control method for a frequency converter. The control method for a frequency converter includes measuring an electrical parameter of a bus of a frequency converter; and detecting and confirming that the electrical parameter of the bus is abnormal and switching the frequency converter to a power generation mode to adjust, according to a target voltage value of the bus, a voltage and phase of a three-phase power outputted by the frequency converter to a motor.

According to the control method for a frequency converter, the electrical parameter of the bus is measured, such that the frequency converter can be switched to a power generation mode when the electrical parameter of the bus is abnormal, thus adjusting the voltage and phase of the outputted three-phase power in order to maintain reasonable voltage and phase differences between the voltage and phase of the outputted three-phase power and a counter-electromotive force of the motor. Therefore, current harmonics and power factors of the motor are optimized, the current of the motor is ensured to be sinusoidal, and the heat generation of the motor is controlled to be within a reasonable range, thereby improving the reliability of the motor unit.

In certain embodiments of the present disclosure, the electrical parameter of the bus includes a bus voltage and/or a bus current. The control method for a frequency converter further includes detecting and confirming that the bus voltage is less than a first voltage threshold and/or the bus current is less than a first current threshold; and determining that the electrical parameter of the bus is abnormal.

In certain embodiments of the present disclosure, the control method for a frequency converter further includes detecting and confirming that the bus voltage is increased to a second voltage threshold and/or the bus current is increased to a second current threshold; and switching to a deceleration stop mode or a flying start mode.

In certain embodiments of the present disclosure, the control method for a frequency converter further includes measuring an electrical parameter of the three-phase power outputted by the frequency converter to the motor; and obtaining a motor rotational speed signal according to the electrical parameter of the three-phase power outputted by the frequency converter to the motor.

In certain embodiments of the present disclosure, the control method for a frequency converter further includes determining the target voltage value of the bus according to a counter-electromotive force of the motor.

A second aspect of embodiments of the present disclosure provides a frequency converter. The frequency converter includes a first measurement module, configured to measure an electrical parameter of a bus of a frequency converter; and a controller, configured to detect and confirm that the electrical parameter of the bus is abnormal and switch the frequency converter to a power generation mode to adjust, according to a target voltage value of the bus, a voltage and phase of a three-phase power outputted by the frequency converter to a motor.

According to the frequency converter, the electrical parameter of the bus is measured, such that the frequency converter can be switched to a power generation mode when the electrical parameter of the bus is abnormal, thus adjusting the voltage and phase of the outputted three-phase power in order to maintain reasonable voltage and phase differences between the voltage and phase of the outputted three-phase power and a counter-electromotive force of the motor. Therefore, current harmonics and power factors of the motor are optimized, the current of the motor is ensured to be sinusoidal, and the heat generation of the motor is controlled to be within a reasonable range, thereby improving the reliability of the motor unit.

In certain embodiments of the present disclosure, the electrical parameter of the bus includes a bus voltage and/or a bus current. The controller is configured to detect and confirm that the bus voltage is less than a first voltage threshold and/or the bus current is less than a first current threshold; and determine that the electrical parameter of the bus is abnormal.

In certain embodiments of the present disclosure, the controller is further configured to detect and confirm that the bus voltage is increased to a second voltage threshold and/or the bus current is increased to a second current threshold; and switch to a deceleration stop mode or a flying start mode.

In certain embodiments of the present disclosure, the frequency converter further includes a second measurement module. The second measurement module is configured to measure an electrical parameter of the three-phase power outputted by the frequency converter to the motor. The controller is further configured to obtain a motor rotational speed signal according to the electrical parameter of the three-phase power outputted by the frequency converter to the motor.

In certain embodiments of the present disclosure, the controller is configured to determine the target voltage value of the bus according to a counter-electromotive force of the motor.

The third aspect of embodiments of the present disclosure provides a computer-readable storage medium having stored therein a computer program. The computer-readable storage medium is stored with a control program for a frequency converter that, when executed by a processor, performs a control method for a frequency converter as described in the first aspect.

The additional aspects and advantages of the present disclosure are partially given in the following description, some of which would become obvious or be understood through the practice of the present disclosure.

### BRIEF DESCRIPTION OF THE DRAWINGS

The foregoing and/or additional aspects and advantages of the present disclosure would be obvious and readily understand in the description of the embodiments in conjunction with the accompanying drawings.
FIG. 1 is a flow chart showing a control method for a frequency converter according to an embodiment of the present disclosure.
FIG. 2 is a block diagram showing the structure of a frequency converter according to an embodiment of the present disclosure.
FIG. 3 is a schematic diagram of a frequency converter according to an embodiment of the present disclosure.

Description of drawing reference signs:
Frequency converter 200, Rectification module 110, Filtration module 120, Inversion module 130, Controller 140, Motor M, First measurement module 141, Second measurement module 142

### DETAILED DESCRIPTION OF EMBODIMENTS

The embodiments of the present disclosure are described in detail below. Examples of the embodiments are shown in the accompanying drawings, in which the same or similar reference numerals indicate the same or similar elements or elements with the same or similar functions. The following embodiments described with reference to the drawings are exemplary and are only used to explain the present disclosure, which cannot be understood as a limitation to the present disclosure.

In the description of this disclosure, it should be understood that the terms "center", "longitudinal", "crosswise", "upper", "lower", "front", "behind", "left", "right", "vertical", "horizontal", "top", "bottom", "inside", "outer" or the like indicate the orientation or positional relationship are based on the orientation or positional relationship shown in the drawings, which is only for the convenience of description and simplifying the description, and does not indicate or imply that the device or element referred to have to have a specific orientation, or be constructed and operated in a specific orientation, therefore they cannot be understood as a limitation of this disclosure. In addition, the terms "first" and "second" are only used for descriptive purposes and cannot be understood as indicating or implying relative importance.

The control method for a frequency converter and the frequency converter according to embodiments of the present disclosure are described with reference to the accompanying drawings hereafter.

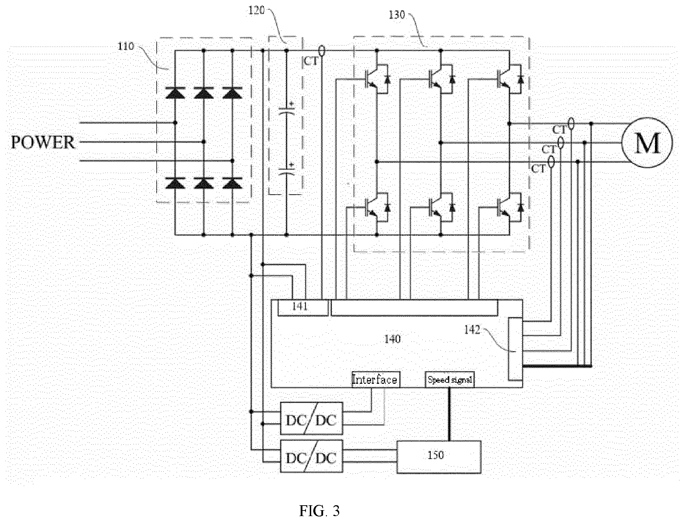

The frequency converter is described before the description of the control method for a frequency converter according to embodiments of the present disclosure. Referring to FIG. 3, the frequency converter includes a rectification module 110, a filtration module 120, an inversion module 130, and a controller 140. The output side of the inversion module 130 is connected to the motor M to output a three-phase power to the motor M.

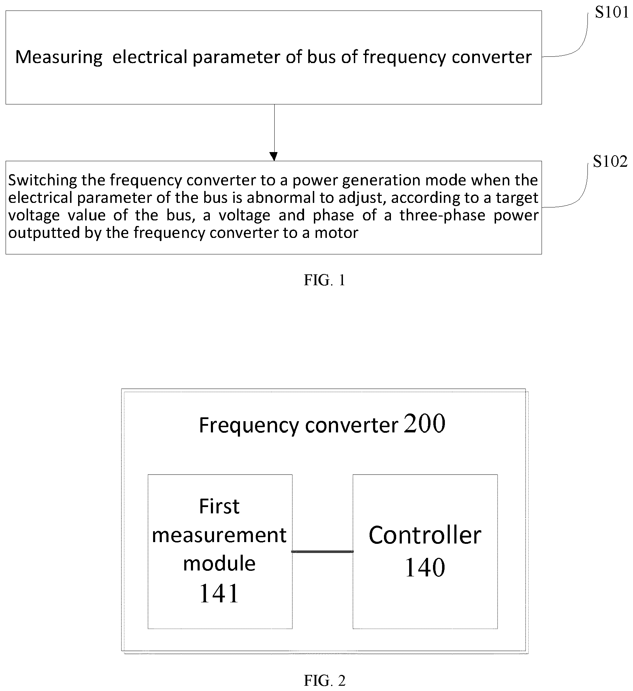

FIG. 1 is a flow chart showing a control method for a frequency converter according to an embodiment of the present disclosure. Referring to FIG. 1, the control method for a frequency converter includes the following steps.

In step S101, an electrical parameter of a bus of a frequency converter is measured.

The electrical parameter of the bus includes but is not limited to at least one of a bus voltage and a bus current. Referring to FIG. 3, the electrical parameter of the bus of the frequency converter can be measured by a first measurement module 141. That is, the first measurement module 141 measures a bus voltage and/or a bus current.

In step S102, the frequency converter is switched to a power generation mode when the electrical parameter of the bus is abnormal, to adjust, according to a target voltage value of the bus, a voltage and phase of a three-phase power outputted by the frequency converter to a motor.

The electrical parameter of the bus is exemplarily illustrated by the bus voltage and/or the bus current. It is determined that whether the bus voltage is less than a first voltage threshold and/or the bus current is less than a first current threshold. If the bus voltage is less than a first voltage threshold and/or the bus current is less than a first current threshold, it is determined that the electrical parameter of the bus is abnormal.

In exemplary embodiments, the first voltage threshold and the first current threshold may be demarcated in advance. For example, it is determined that the electrical parameter of the bus is abnormal when the bus voltage is less than a voltage cut-off value and/or the bus current is less than a current cut-off value according to experiments. The voltage cut-off value is used as the first voltage threshold and the current cut-off value is used as the first current threshold.

Therefore, when the electrical parameter of the bus is abnormal, a working mode of the frequency converter is switched to a power generation mode. A voltage and phase of a three-phase power outputted by the frequency converter to a motor is adjusted according to a target voltage value of the bus. That is, the frequency converter is controlled to adjust the voltage and phase of the outputted three-phase power, so as to ensure that the voltage and phase differences between the voltage and phase of the outputted three-phase power and a counter-electromotive force of the motor are kept in a reasonable range. Particularly, when the frequency converter is operated in the power generation mode, the voltage and phase of the three-phase power are adjusted in order to stabilize the bus voltage in a control value, i.e., a target voltage value of the bus. As such, current harmonics and power factors of the motor are optimized, the current of the motor is ensured to be sinusoidal, and the heat generation of the motor is controlled to be within a reasonable range. In the above description, the target voltage value of the bus is determined according to a counter-electromotive force of the motor.

According to the control method for a frequency converter, the electrical parameter of the bus is measured, such that the frequency converter can be switched to a power generation mode when the electrical parameter of the bus is abnormal, thus adjusting the voltage and phase of the outputted three-phase power in order to maintain reasonable voltage and phase differences between the voltage and phase of the outputted three-phase power and a counter-electromotive force of the motor. Therefore, current harmonics and power factors of the motor are optimized, the current of the motor is ensured to be sinusoidal, and the heat generation of the motor is controlled to be within a reasonable range, thereby improving the reliability of the motor unit.

In an embodiment of the present disclosure, the control method for a frequency converter further includes determining whether the bus voltage is increased to a second voltage threshold and/or the bus current is increased to a second current threshold; and if yes, switching to a deceleration stop mode or a flying start mode. That is, in the case that the frequency converter is operated in a power generation mode, if the bus voltage returns to an exit threshold value (i.e., the second voltage threshold), the frequency converter can be switched to a deceleration stop mode or a flying start mode according to the control condition of the motor unit, thereby improving the reliability of operation of the motor unit. The second voltage threshold can be demarcated in advance.

In an embodiment of the present disclosure, the control method for a frequency converter further includes measuring an electrical parameter of the three-phase power outputted by the frequency converter to the motor, and obtaining a motor rotational speed signal according to the electrical parameter of the three-phase power outputted by the frequency converter to the motor. Referring to FIG. 3, the electrical parameter of the three-phase power outputted by the frequency converter to the motor can be measured by a second measurement module 142. The electrical parameter of the three-phase power outputted by the frequency converter to the motor includes but is not limited to a voltage and/or current of the three-phase power outputted by the frequency converter to the motor.

The voltage and/or current of an output side of the frequency converter, i.e., the three-phase power outputted by the frequency converter to the motor, is measured. A current position of a rotor of the motor is calculated according to the voltage and/or current of the output side of the frequency converter, i.e., the three-phase power outputted by the frequency converter to the motor. Further, a motor speed rotational signal can be calculated according to the current position of the rotor. In an exemplary embodiment of the present disclosure, referring to FIG. 3, the motor rotational speed signal can be sent to a magnetic bearing controller 150 for usage. Therefore, no additional detection circuit is required for detection, which has the advantage of detection in a simple, reliable, and low-cost manner.

FIG. 2 is a block diagram showing the structure of a frequency converter according to an embodiment of the present disclosure. Referring to FIG. 2 in combination with FIG. 3, the frequency converter 200 according to an embodiment of the present disclosure includes a rectification module 110, a filtration module 120, an inversion module 130, a controller 140, and a first measurement module 141.

Among them, the first measurement module 141 is configured to measure the electrical parameter of the bus of the frequency converter. The controller 140 is configured to switch the frequency converter to a power generation mode when the electrical parameter of the bus is abnormal, to adjust, according to the target voltage value of the bus, a voltage and phase of the three-phase power outputted by the frequency converter to the motor M.

In an embodiment of the present disclosure, the electrical parameter of the bus includes a bus voltage and/or a bus current. The controller 140 is configured to determine whether the bus voltage is less than a first voltage threshold and/or the bus current is less than a first current threshold; and if yes, determine that the electrical parameter of the bus is abnormal.

In an embodiment of the present disclosure, the controller 140 is further configured to determine whether the bus voltage is increased to a second voltage threshold and/or the bus current is increased to a second current threshold; and if yes, switch to a deceleration stop mode or a flying start mode.

In an embodiment of the present disclosure, the frequency converter 200 further includes a second measurement module 142. The second measurement module 142 is configured to measure an electrical parameter of the three-phase power outputted by the frequency converter to the motor. The controller is further configured to obtaine a motor rotational speed signal according to the electrical parameter of the three-phase power outputted by the frequency converter to the motor.

In an embodiment of the present disclosure, the controller 140 is configured to determine the target voltage value of the bus according to a counter-electromotive force of the motor.

According to the frequency converter, the electrical parameter of the bus is measured, such that the frequency converter can be switched to a power generation mode when the electrical parameter of the bus is abnormal, thus adjusting the voltage and phase of the outputted three-phase power in order to maintain reasonable voltage and phase differences between the voltage and phase of the outputted three-phase power and a counter-electromotive force of the motor. Therefore, current harmonics and power factors of the motor are optimized, the current of the motor is ensured to be sinusoidal, and the heat generation of the motor is controlled to be within a reasonable range, thereby improving the reliability of the motor unit.

It should be noted that the exemplary implementation manner of the frequency converter in the embodiment of the present disclosure is similar to the exemplary implementation manner of the control method for a frequency converter in the embodiment of the present disclosure, which has been described in the method section, and thus is not repeated herein.

Further, according to embodiments of the present disclosure, there is provided a computer-readable storage medium having stored therein a computer program, wherein the computer-readable storage medium is stored with a control program for a frequency converter that, when executed by a processor, performs a control method for a frequency converter as described above.

The foregoing non-transitory computer-readable storage medium may be any combination of one or more computer-readable media. The computer-readable medium may be a computer-readable signal medium or a computer-readable storage medium. The computer-readable storage medium may be for example, but not limited to, electrical, magnetic, optical, electromagnetic, infrared or semiconductor systems, devices, or apparatus, or any combination thereof. The exemplary examples of the computer-readable storage medium in a non-exhaustive list include an electrical connection with one or more wires, a portable computer disk, a hard disk, Random Access Memory (RAM), Read Only Memory (ROM), Erasable Programmable Read Only Memory (EPROM) or flash memory, optical fiber, portable compact disk read-only memory (CD-ROM), an optical storage device, a magnetic memory device, or any suitable combination thereof. In the present disclosure, the computer-readable storage medium can be any tangible medium that contains or stores a program, and the program can be executed by an instruction execution system, apparatus or device, or their combination.

The computer-readable signal medium may include a data signal propagated in baseband or as a part of a carrier wave, on which a computer-readable program code is carried. This propagated data signal can have many forms, including but not limited to, electromagnetic signals, optical signals, or any suitable combination thereof. The computer-readable signal medium may also be any computer-readable medium other than the computer-readable storage medium. The computer-readable medium may send, propagate, or transmit a program for use by the instruction execution system, apparatus or device or their combination.

The program code carried on the computer-readable medium can be transmitted by any suitable medium, including but not limited to, wireless, wire, optical cable, RF or the like or any suitable combination thereof.

The computer program code used to perform the operation of the present disclosure can be written in one or more programming languages or a combination thereof. The programming language includes not only object-oriented programming languages such as Java, Smalltalk, C++, but also conventional procedural programming languages such as "C" language or similar programming language. The program code can be executed entirely on the user's computer, partly on the user's computer, or executed as an independent software package, partly on the user's computer and partly executed on a remote computer, or entirely executed on a remote computer or server. In the case of a remote computer, the remote computer can be connected to the user's computer through any kind of network, including Local Area Network (LAN) or Wide Area Network (WAN), or connected to an external computer, for example, connected via the Internet by an Internet service provider.

Although the embodiments of the present disclosure have been described, ordinary skilled persons in the art can understand that various changes, modifications, substitutions, and modifications can be made to these embodiments without departing from the principle and purpose of the present disclosure. The claims and their equivalents define the scope of the present disclosure.

## Claims

1. A control method for a frequency converter, comprising:
measuring an electrical parameter of a bus of the frequency converter, and
detecting and confirming that the electrical parameter of the bus is abnormal and switching the frequency converter to a power generation mode, so as to adjust, according to a target voltage value of the bus, a voltage and a phase of a three-phase power outputted by the frequency converter to a motor.

2. The control method for a frequency converter according to claim 1, wherein the electrical parameter of the bus comprises a bus voltage and/or a bus current,
the method further comprises:
detecting and confirming that the bus voltage is less than a first voltage threshold and/or the bus current is less than a first current threshold, and determining that the electrical parameter of the bus is abnormal.

3. The control method for a frequency converter according to claim 2, further comprising:
detecting and confirming that the bus voltage is increased to a second voltage threshold and/or the bus current is increased to a second current threshold, and switching to a deceleration stop mode or a flying start mode.

4. The control method for a frequency converter according to any one of claims 1 to 3, further comprising:
measuring an electrical parameter of the three-phase power outputted by the frequency converter to the motor, and
obtaining a motor rotational speed signal according to the electrical parameter of the three-phase power outputted by the frequency converter to the motor.

5. The control method for a frequency converter according to any one of claims 1 to 4, further comprising:
determining the target voltage value of the bus according to a counter-electromotive force of the motor.

6. A frequency converter, comprising:
a first measurement module, configured to measure an electrical parameter of a bus of the frequency converter, and
a controller, configured to detect and confirm that the electrical parameter of the bus is abnormal, and switch the frequency converter to a power generation mode, so as to adjust, according to a target voltage value of the bus, a voltage and a phase of a three-phase power outputted by the frequency converter to a motor.

7. The frequency converter according to claim 6, wherein the electrical parameter of the bus comprises a bus voltage and/or a bus current,
the controller is configured to detect and confirm that the bus voltage is less than a first voltage threshold and/or the bus current is less than a first current threshold, and determine that the electrical parameter of the bus is abnormal.

8. The frequency converter according to claim 7, wherein the controller is further configured to detect and confirm that the bus voltage is increased to a second voltage threshold and/or the bus current is increased to a second current threshold, and switch to a deceleration stop mode or a flying start mode.

9. The frequency converter according to any one of claims 6 to 8, further comprising:
a second measurement module, configured to measure an electrical parameter of the three-phase power outputted by the frequency converter to the motor,
wherein the controller is further configured to obtain a motor rotational speed signal according to the electrical parameter of the three-phase power outputted by the frequency converter to the motor.

10. The frequency converter according to any one of claims 6 to 9, wherein the controller is configured to determine the target voltage value of the bus according to a counter-electromotive force of the motor.

11. A computer-readable storage medium having stored therein a computer program, wherein the computer-readable storage medium is stored with a control program for a frequency converter that, when executed by a processor, performs a control method for a frequency converter according to any one of claims 1 to 5.
